# EUROPEAN PATENT SPECIFICATION

(11) **EP 1 359 584 B1**
(45) Date of publication and mention of the grant of the patent: **21.03.2007**
(21) Application number: 03008933.8
(22) Date of filing: 16.04.2003
(51) Int. Cl.: G11B 27/22

(54) **Video playback apparatus and video playback method**
Gerät und Verfahren zur Videowiedergabe
Appareil et procédé de lecture vidéo

(30) Priority: 30.04.2002 JP 2002128822
(43) Date of publication of application: 05.11.2003
(73) Proprietor: KABUSHIKI KAISHA TOSHIBA, Tokyo (JP)
(72) Inventor: Hanabusa, Kazuya, K.Kaisha Toshiba, Intellectual, Tokyo 105-8001 (JP)
(74) Representative: Henkel, Feiler & Hänzel

(56) References cited:
- US-A- 5 987 210
- US-B1- 6 360 053

## Description

The present invention relates to a video playback apparatus which plays back video and audio data recorded on a recording medium and, more particularly, to a video playback apparatus having return and sending functions during playback.

Recently, video recording/playback apparatuses for processing digital image information are developed and becoming popular. Not only a video image recorded at a higher quality but also a high added value for an operation system is required. For example, assume that a user wants to return the playback position a little back during playback of a video image with a conventional video recording/playback apparatus. This occurs for example when the user kept his/her eyes off the image for a while. To return the playback position back a little, rewinding of the tape or skip to a preset position can be done. Alternatively, the user designates the time corresponding to the playback position.

Jpn. Pat. Appln. KOKAI Publication No. 07-307929 as a prior art resembling the operation technique describes automatic scan processing in an image playback apparatus which handles a magnetic tape with a character signal inserted. More specifically, the information of the start position of each character signal on the magnetic tape is recorded. When character information is missed, it is searched for by button operation.

However, the above-described prior art describes a searching method when a character signal is inserted into an analog video signal recorded on a magnetic tape. This prior art does not mention any method of returning the playback position a little by a desired amount during playback of digital video information and digital audio information.

US 6 360 053 discloses an apparatus according to the precharacterizing part of claim 1 and a method as specified in claim 13. The documents shows a method and apparatus providing for "instant replays" and "quick skip" functionality in a media playback device. In the case of an instant replay, under user control, the media playback moves temporally backwards. In the case of quick skip, under user control, the media playback moves temporally forward. In one embodiment, the temporal movement is based on a predetermined time (e.g., move back 5 seconds, move forward 30 seconds). In another embodiment, the temporal movement is based on scene change analysis.

On the other hand, US 5 987 210 discloses a video recording and playback device which incorporates a processor for processing the video signal to detect the presence of commercial messages. Video and audio event detectors detect the presence of events in the signal as it is recorded. The timing relationship of the detected events is analyzed to classify the video segments between events as program material or as commercial messages. After a program is recorded, control marks are generated to indicate the beginning and end of commercial groups so that they will be skipped during subsequent replay of the recorded program.

It is an aspect of the present invention to provide a video playback apparatus and method capable of returning the playback start position of digital video information such as MPEG (Moving Picture Experts Group) by a desired amount.

The above object is achieved by an apparatus according to claim 1 and by a method according to claim 8. The dependent claims are directed to further advantageous aspects of the invention.

According to the present invention, there is provided a video playback apparatus comprises a buffer section which stores digital video information and digital audio information; a playback section which reads out and plays back the digital video information and digital audio information from the buffer section, and plays back the digital video information and digital audio information in accordance with a playback instruction; and a control section which, upon receiving a return instruction of the playback position, controls to return the playback position of the playback section in accordance with a change in digital video information and digital audio information and to start playback by the playback section from the playback position.

In the present invention with the above characteristic feature, operation of returning the playback position of video information by only a small amount can easily be performed, though this operation is unavailable with the conventional scan key or fast rewind key. More specifically, the scan key returns the video playback position chapter by chapter. The fast rewind key returns the video playback position very fast. Hence, the video playback position cannot be returned to a change point of MPEG sub-picture information, e.g., each subtitle of a movie by, e.g., about 10 sec. In the present invention, if a recording medium has subtitle information as sub-picture information, processing of returning the playback position by an amount corresponding, e.g., one line can easily be executed.

Additionally, in the present invention, when the change point of sub-picture information is detected and stored during playback, the position can instantaneously be searched for by operating the return key unique to the present invention.

Furthermore, in the present invention, not only a subtitle of sub-picture information but also a change in main-picture information or a change or mute portion in audio signal is detected and immediately searched for.

This summary of the invention does not necessarily describe-all necessary features so that the invention may also be a sub-combination of these described features.

The invention can be more fully understood from the following detailed description when taken in conjunction with the accompanying drawings, in which:
FIG. 1 is a view showing the outer appearance of an embodiment of a remote controller having a return key and send key according to the present invention;
FIG. 2 is a block diagram showing the structure of an embodiment of a video recording/playback apparatus according to the present invention;
FIG. 3 is a flow chart showing processing of a video recording/playback apparatus according to the first embodiment of the present invention;
FIG. 4 is a flow chart showing processing of the video recording/playback apparatus according to the first embodiment of the present invention;
FIG. 5 is a view for explaining processing of the video recording/playback apparatus according to the first embodiment of the present invention;
FIG. 6 is a flow chart showing processing of a video recording/playback apparatus according to the second embodiment of the present invention;
FIG. 7 is a flow chart showing time setting processing of a video recording/playback apparatus according to the third embodiment of the present invention;
FIG. 8 is a flow chart showing processing of the video recording/playback apparatus according to the third embodiment of the present invention; and
FIG. 9 is a flow chart showing processing of a video recording/playback apparatus according to the fourth embodiment of the present invention.

An embodiment of a video playback apparatus according to the present invention will be described below in detail with reference to the accompanying drawing.

### <First Embodiment>

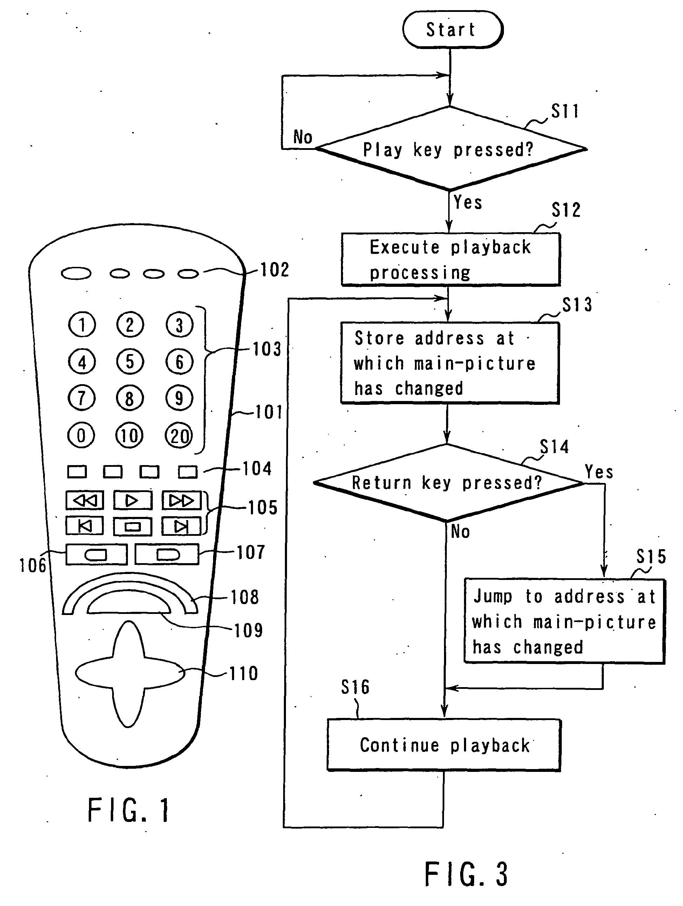

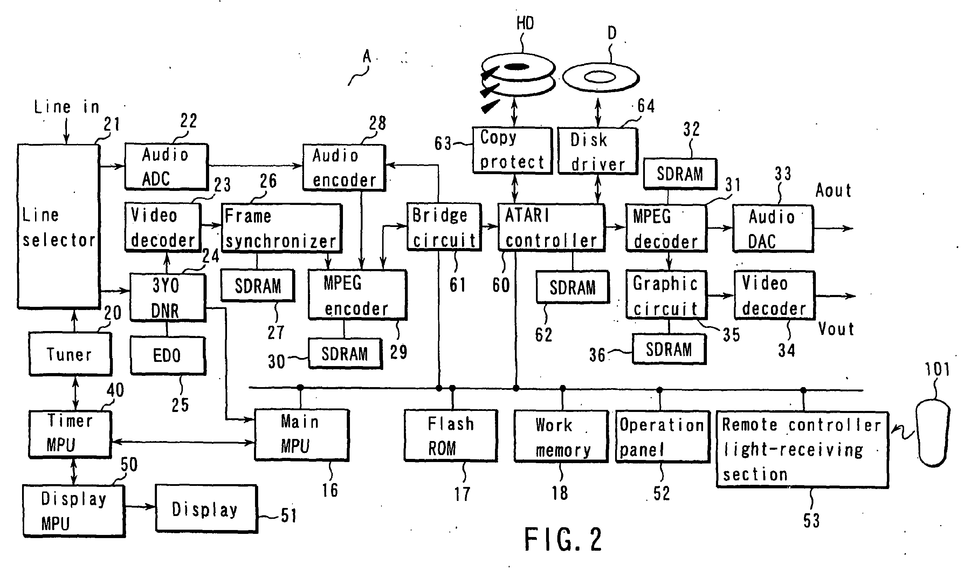

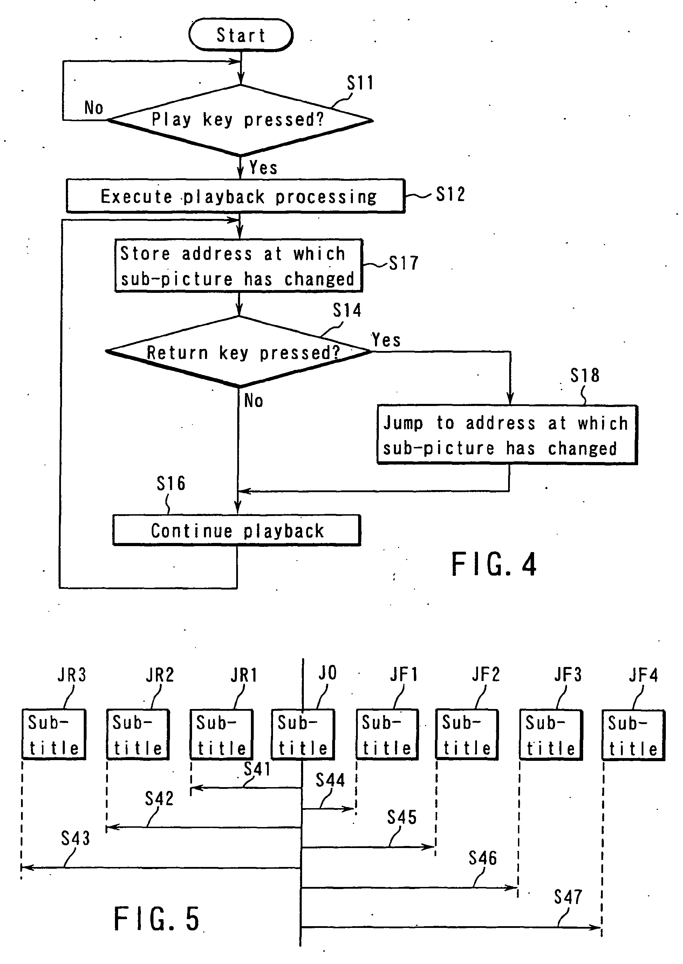

In the first embodiment, change points in main-picture and sub-picture images of video information are detected and instantaneously searched for. FIG. 1 is a view showing the outer appearance of an embodiment of a remote controller having a return key and send key according to the present invention. FIG. 2 is a block diagram showing the structure of an embodiment of a video recording/playback apparatus according to the present invention. FIGS. 3 and 4 are flow charts showing processing of the first embodiment. FIG. 5 is a view for explaining processing of the first embodiment.

### (Structure of Video Recording/Reproducing Apparatus)

FIG. 2 shows the structure of a video recording/playback apparatus according to the present invention, which is capable of standard conversion processing and editing processing. The overall operation of a video recording/playback apparatus A is controlled by a main MPU 16 with a flash ROM 17 and work memory 18 through a data bus. As components for a function of mainly recording video information on a hard disk HD or optical disk D, a tuner 20, a line selector 21 to which line in is supplied, an audio AD converter 22 which receives a signal from the line selector 21, a video decoder 23 which receives a video signal through a 3YC DNR 24 with an EDO 25, and a frame synchronizer 26 which has an SDRAM 27 and receives a frame signal from the video decoder 23 are arranged. The apparatus also has an audio encoder 28 which encodes an audio signal from the audio AD converter 22, and an MPEG2 encoder 29 with an SDRAM 30, which receives a video signal from the frame synchronizer 26 and encodes an MPEG signal. As storages for video information to be recorded, the apparatus has the hard disk HD through a copy protect 63 which including buffer function (buffer section), and the optical disk D through a disk driver 64 which including buffer function (buffer section). And, the buffer function (buffer section) stores, at least, the digital video information and digital audio information during playback operation.

The tuner 20 is under the operation control of a timer MPU 40. A display 51 is also controlled by a display MPU 50 under the operation control of the timer MPU 40.

As components for a playback function, the above-described hard disk HD through the copy protect 63 and the optical disk D through the disk driver 64 are prepared as storage areas from which video signals are to be read out. The apparatus also has an ATAPI controller 60 which processes a readout video signal, an MPEG decoder 31 with an SDRAM 32, which receives a video signal from the ATAPI controller 60 and decodes the video signal, a graphic circuit 35 with an SDRAM 36, a video decoder 34 which receives the output from the graphic circuit 35 and decodes a video signal, and an audio DA converter 33 which D/A-converts an audio signal from the MPEG decoder 31. As a circuit which mediates between the recording function and playback function, a bridge circuit 61 controlled by the main MPU is provided.

An operation panel 52 is connected to the main MPU 16 through the data bus to receive user operation. Similarly, a remote controller light-receiving section 53 which receives a signal from a remote controller 101 is connected to the main MPU 16 through the data bus.

As shown in FIG. 1, the remote controller 101 has a power switch 102, number keys 103, and mode keys 104. The remote controller 101 also has a fast forward key, fast rewind key, play key, scan key, and stop key 105 serving as operation keys. In addition, an enter key 108, cancel key 109, and jog key 110 are arranged. As a characteristic feature of the present invention, a return key 106 and send key 107 are provided.

The above-described operation panel 52 also has at least the same operation keys as those on the remote controller 101.

### (Operation)

In the optical disk apparatus A having the above arrangement, the whole blocks are controlled by the main microprocessor (main MPU) section 16 mainly in accordance with an operation program stored in the flash ROM 17. Accordingly, recording processing, playback processing, editing processing, and standard conversion processing from DVD-VR standard to DVD-V standard are executed.

A signal from the line in or the tuner 20 is supplied to the line selector 21. The signal from the TV tuner section 20 is separated into a video signal and audio signal, which are then supplied to the audio encoding section 28 and MPEG encoding section 29, respectively.

The audio encoding section 28 compresses the digital audio signal by AC-3 or MPEG. The digital audio signal may be recorded by linear PCM without compression. The audio channel mode (monaural/stereophonic/dual monaural) can be detected by the TV tuner section 20. This information is input to the main MPU section 16 through the timer MPU section 40. The audio encoding section 28 encodes the audio signal on the basis of the channel mode information from the main MPU section 16. When the channel mode has changed, the main MPU section 16 notifies the audio encoding section 28 of it and also stores PTM at that time in the work RAM/SDRAM section 18.

The MPEG encoding section 29 compresses the digital video signal by MPEG and formats it into the format of DVD-VR standard together with the output from the audio encoding section 28. The video aspect ratio can be detected by the 3YC DNR section 24. The detected aspect ratio information is input to the main MPU section. The MPEG encoding section 29 encodes the video signal on the basis of the information from the main MPU section 16. When the aspect ratio has changed, the main MPU section notifies the MPEG encoding section 29 of it and also stores PTM at that time in the work RAM/SDRAM section 18.

The data formatted by the MPEG encoding section 29 is recorded on the disk D or recording medium HD through the ATAPI controller 60. Management information related to the recorded data is generated by the main MPU 16, stored in the work RAM/SDRAM section 18, and then recorded on the disk D or recording medium HD.

As described above, video information such as MPEG recorded on the disk D or recording medium HD contains at least main-picture information, sub-picture information, and audio information. The video playback apparatus according to the present invention plays back video information which is supplied from the line selector 21 or tuner 20 and recorded on the hard disk drive HD or optical disk D in the above-described manner, or video information of a DVD (Digital Versatile Disk), i.e., the optical disk D externally given and loaded, under the control of the main MPU 16. More specifically, video information is separated into an audio signal and video signal and played back through decoding processing by the MPEG decoder 31 on the basis of the program stored in the flash ROM 17 or the like in accordance with the operation of the operation keys on the operation panel 52 or remote controller 101.

### (Operation of Return Key Unique to Present Invention)

Processing which is executed when a return key unique to the present invention is pressed during playback processing will be described below in detail with reference to the flow charts in FIGS. 3 and 4 and the explanatory view in FIG. 5.

### (Return Processing Based on Main-Picture Image)

FIG. 3 is a flow chart showing processing of detecting a change point in main-picture image. Referring to this flow chart, when the user presses the play key on the operation panel 52 or remote controller 101 to instruct playback of video and audio information (S11), the main MPU 16 designates a playback position for the disk driver 64. The MPEG decoder 31 decodes a signal read out from the optical disk D into audio information and video information displayable on the display 51. Accordingly, playback processing is executed (S12).

Next, a change point in main-picture image is detected (S13). A change point in main-picture image includes various cases. More specifically, the luminance of current main-picture information is compared with that of main-picture information of an immediately preceding frame. If a change with a predetermined value or more is detected, the address of the main-picture information with the change is recorded in the work memory 18 or the like. With this operation, a portion where the camera angle is switched in a drama or movie can be detected.

For this change point detection, not the luminances but the RGB signals of frames may be compared. If a change with a predetermined value or more is detected, the address of the main-picture information with the change is recorded in the work memory 18 or the like.

For the comparison processing, instead of continuously comparing the current frame with an immediately preceding frame, main-picture information for a predetermined period may be stored, a change in luminance or RGB signals may be observed, and a portion that exhibits a change with a predetermined value or more may be detected.

Alternatively, pieces of main-picture information themselves may be compared. The similarity between them may be quantized, and the address of a portion that exhibits a change with a predetermined value or more may be recorded in the work memory 18 or the like.

A portion at which the aspect ratio changes may be detected. According to this method, for example, a movie area and a commercial area can be separated.

Next, when the return key 106 of the remote controller 101 or operation panel 52 is pressed during playback (S14), the main MPU 16 is notified of the user operation. The main MPU 16 reads out the stored address on the basis of the notifications from the MPEG decoder 31 and the remote controller 101 or operation panel 52 and controls to jump the playback position on the optical disk D to the address (S15). Reproduction is continued from the address at the jumping destination (S16).

According to this method, a change in main-picture image can be detected. This makes it possible to execute fine return processing in, e.g., a movie, which is unavailable by conventional send or return processing to each chapter with a scan key. In, e.g., a movie, when the return key 106 is operated, the video playback position can be returned to each of video images sensed by different cameras. Hence, the user can very finely see the recorded video image.

Which change in main-picture image should be detected can be set from the setting window of the operation panel 52. The function of the return key 106 can be finely set in accordance with user's will.

In step S13, when a change in main-picture image is always monitored, and the address is continuously updated before the return key 106 is pressed, jump to the designated address can be instantaneously done when the return key 106 is pressed. However, a change point may be detected after the return key 106 is pressed. According to this method, the load on the processing section such as the main MPU 16 can be reduced. This also copes with send processing by the send key 107 (to be described later in the fifth embodiment). In this case as well, the video image can be finely played back in accordance with user's will.

### (Return Processing Based on Sub-Picture Image)

FIG. 4 is a flow chart showing processing of detecting a change point in sub-picture image. Referring to this flow chart, when the user presses the play key on the operation panel 52 or remote controller 101 to instruct playback of video and audio information (S11), the main MPU 16 designates a playback position for the disk driver 64. The MPEG decoder 31 decodes a signal read out from the optical disk D into audio information and video information displayable on the display 51. Accordingly, playback processing is executed (S12).

Next, a change point in sub-picture image is detected (S17). A change point in sub-picture image can be detected in various ways. This will be described in detail while exemplifying a subtitle. That is, a video image of a movie or the like has subtitle information as a sub-picture image. Referring to FIG. 5, before and after a subtitle J0 that is currently played back, an immediately preceding subtitle JR1, second preceding subtitle JR2, third preceding subtitle JR3, immediately succeeding subtitle JF1, second succeeding subtitle JF2, third succeeding subtitle JF3, and fourth succeeding subtitle JF4 are present. These pieces of subtitle information as sub-picture information are already detected. The start addresses of the subtitles are sequentially recorded in the work memory 18 or the like. Accordingly, a portion where lines in a movie or the like appear can be sequentially detected.

The change point in sub-picture image is not limited to the subtitle. A change in any other information can also be incorporated in the present invention.

Next, when the return key 106 of the remote controller 101 or the return key of operation panel 52 is pressed during playback (S14), the main MPU 16 is notified of the user operation. The main MPU 16 reads out the stored address on the basis of the notifications from the MPEG decoder 31 and the remote controller 101 or operation panel 52 and controls to jump the playback position on the optical disk D to the address (S18). Reproduction is continued from the address at the jumping destination (S16).

According to this method, a change in sub-picture image, e.g., a switching point between subtitles can be detected. This makes it possible to execute fine return processing for each subtitle in, e.g., a movie, which is unavailable by conventional send or return processing to each chapter with a scan key.

More specifically, in, e.g., a movie, when the return key 106 is operated, the video image can be returned for each line and confirmed. For this reason, for example, a line that the user cannot sufficiently understand can be confirmed by returning the video image. Hence, the user can finely see the contents of a movie.

Like the main-picture image, which change in sub-picture image should be detected can be set from the setting window of the operation panel 52. The function of the return key 106 can be finely set in accordance with user's will.

In step S17, when a change in sub-picture image is always monitored, and the address is continuously updated before the return key 106 is pressed, jump to the designated address can be instantaneously done when the return key 106 is pressed. However, a change point in sub-picture image may be detected after the return key 106 is pressed. According to this method, the playback position of a video image can be finely returned back or put forward for each line. In, e.g., a movie, the user need not see the long movie again from the beginning and can understand the contents well in a short time.

As described above, according to this embodiment, a change point in main-picture image or sub-picture image is detected, and playback of the video image is resumed from that point. If the sub-picture image is a subtitle in a movie, the video image can freely be played back for each line. For a main-picture image, a switching point of camera angle or the like can be detected. Hence, the flow of the entire video image can be surveyed in a short time.

### <Second Embodiment>

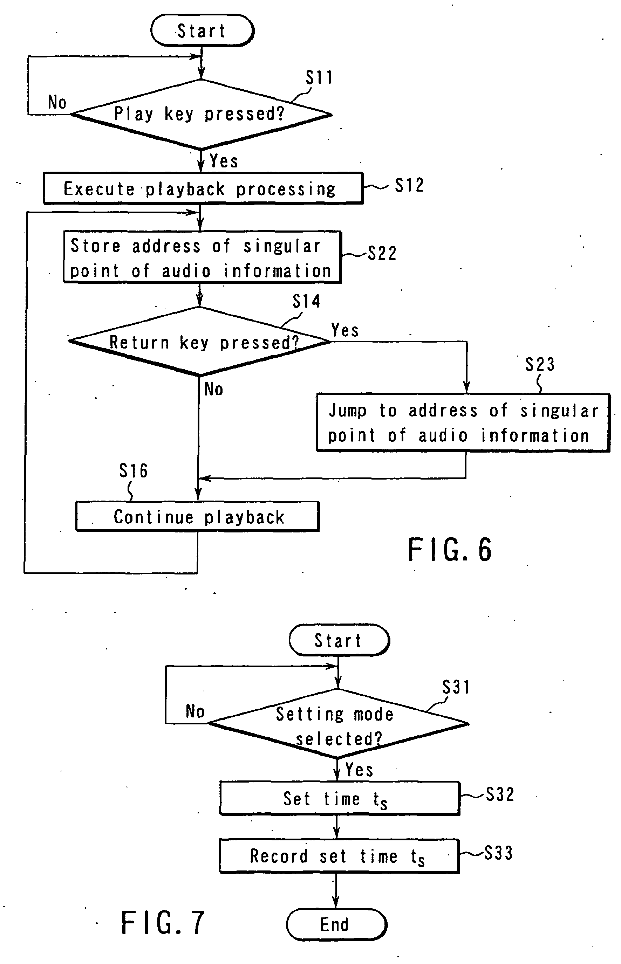

In the second embodiment, a singular point in audio information of recorded information is detected and instantaneously searched for by key operation. FIG. 6 is a flow chart showing processing of a video recording/playback apparatus according to the second embodiment of the present invention.

In the second embodiment of the present invention, referring to the flow chart shown in FIG. 6, when the user presses the play key on an operation panel 52 or remote controller 101 to instruct playback of video and audio information (S11), a main MPU 16 designates a playback position for a disk driver 64. An MPEG decoder 31 decodes a signal read out from an optical disk D into audio information and video information displayable on the display 51. Accordingly, playback processing is executed (S12).

Next, a singular point in audio information is detected (S22). A singular point in audio information can be detected in various ways. Here, a mute portion in audio information is detected as a singular point. More specifically, the level of audio information is always detected during playback processing. The address of a mute portion is recorded in a work memory 18 or the like and continuously updated.

The singular point in audio information is not limited to a complete mute portion. Instead, a portion at which the audio level has a predetermined value or less may be detected as a singular point. Alternatively, a portion having the lowest audio level in a predetermined period may be detected as a singular point.

Next, when a return key 106 of the remote controller 101 or operation panel 52 is pressed during playback (S14), the main MPU 16 is notified of the user operation. The main MPU 16 reads out the stored address on the basis of the notifications from the MPEG decoder 31 and the remote controller 101 or operation panel 52 and controls to jump the playback position on the optical disk D to the address (S23). Reproduction is continued from the address at the jumping destination (S16).

According to this method, for example, a break in conversation or, in a TV program, an appropriate end in video contents such as the start or end portion of a commercial is detected as a singular point in audio information. In a movie, the video image can be returned and confirmed for each conversation by operating the return key 106.

This therefore makes it possible to execute fine video playback processing which is unavailable by conventional send or return processing to each chapter with a scan key.

As in the first embodiment, the singular point to be detected can be set from the setting window of the operation panel 52. The function of the return key can be finely set in accordance with user's will.

In step S22, when a singular point in audio information is always monitored, and the address is continuously updated before the return key 106 is pressed, jump to the designated address can be instantaneously done when the return key 106 is pressed. However, a singular point in audio information may be detected after the return key 106 is pressed.

In this method, more specifically, in detecting a singular point such as a mute point, when the user presses the return key 106 to designate the playback position, the main MPU 16 designates for the disk driver 64 a position earlier than the current playback position by a predetermined time (e.g., 1 sec). The MPEG decoder 31 decodes audio information of the readout signal. When it is determined that the decoding result is mute or almost mute, the main MPU 16 defines that position as a new playback position and starts playback. If the decoded audio information is not mute, the main MPU 16 designates for the disk driver 64 a position earlier than that position by a predetermined time (same as in the preceding processing). When this operation is repeated until a playback position at which audio information is mute is detected, playback can be started from a position where the audio information is mute.

In this method, not only for the return key 106 but also for the send key, the playback position can be changed to a singular point in audio information. Hence, a small switching point in video contents can be detected, and playback can be resumed from that point by detecting a singular point in audio information, though this operation cannot be performed by a scan key, fast rewind key, or fast forward key in the conventional apparatus.

As described above, according to the second embodiment, a singular point such as a mute point in audio information is detected by operating the return key, and playback is started from that new playback position. Hence, the playback position can easily be returned to a break in conversation or a switching point between a program and a commercial.

### <Third Embodiment>

In the third embodiment, the moving amount by a return key or the like is determined by a set value.

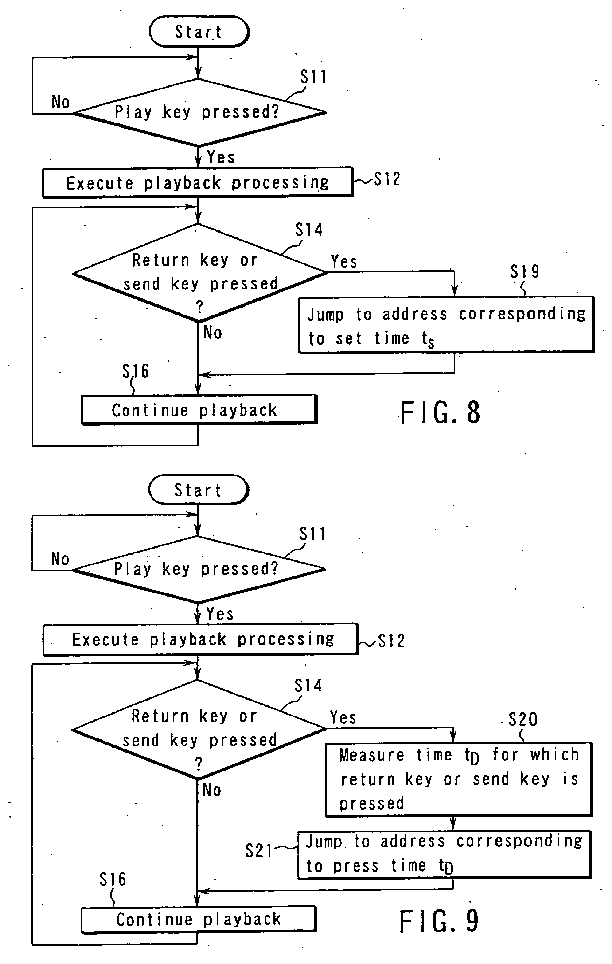

FIG. 7 is a flow chart showing time setting processing of a video recording/playback apparatus according to the third embodiment of the present invention. FIG. 8 is a flow chart showing processing of the third embodiment.

Referring to the flow chart shown in FIG. 7, when a setting mode for a value of movement by a return key 106 or send key 107 is selected by user operation through an operation panel 52 or the like (S31), the user sets a time tₛ corresponding to movement in accordance with an instruction in the operation window on a display 51 (S32). The set time tₛ is recorded and stored in, e.g., a work memory 18 or the like.

Next, referring to the flow chart shown in FIG. 8, when the user presses the play key on the operation panel 52 or remote controller 101 to instruct playback of video and audio information (S11), a main MPU 16 designates a playback position for a disk driver 64. An MPEG decoder 31 decodes a signal read out from an optical disk D into audio information and video information displayable on the display 51. Accordingly, playback processing is executed (S12).

Next, when the return key 106 of the remote controller 101 or operation panel 52 is pressed during playback (S14), the main MPU 16 is notified of the user operation. The main MPU 16 controls to jump the playback position on the optical disk D to the address corresponding to the stored moving time tₛ on the basis of the notifications from the MPEG decoder 31 and the remote controller 101 or operation panel 52 and (S19). Reproduction is continued from the address at the jumping destination (S16).

According to this method, the playback position can be finely set using the return key 106 and send key 107 in accordance with a freely set time such as a short time, e.g., 1 sec or 5 sec to a moving time such as 10 sec or 20 sec for a commercial, which is set as user will. When the return key 106 or send key 107 is pressed, e.g., 5 times, a time five-fold the set time is calculated by the main MPU 16, an address corresponding to the calculation result is calculated. When the playback position is moved in accordance with the address, the playback position can easily be moved to a desired position.

Hence, the third embodiment makes it possible to finely designate the playback position of a video image, which is unavailable by conventional send or return processing to each chapter with a scan key.

### <Fourth Embodiment>

In the fourth embodiment, the return key or send key press time is measured, and the moving amount of the playback position is determined in accordance with the measurement value. FIG. 9 is a flow chart showing processing of a video recording/playback apparatus according to the fourth embodiment of the present invention.

In the fourth embodiment, referring to the flow chart shown in FIG. 9, when the user presses the play key on an operation panel 52 or remote controller 101 to instruct playback of video and audio information (S11), a main MPU 16 designates a playback position for a disk driver 64. An MPEG decoder 31 decodes a signal read out from an optical disk D into audio information and video information displayable on a display 51. Accordingly, playback processing is executed (S12).

Next, when a return key 106 or send key 107 of the remote controller 101 or the return key 106 or send key 107 of the operation panel 52 is pressed during playback (S14), the main MPU 16 is notified of the user operation. The main MPU 16 measures a press time tp (time after the key is pressed until released) (S20). The main MPU 16 controls to jump the playback position on the optical disk D to the address corresponding to the time (S21). Reproduction is continued from the address at the jumping destination (S16).

A moving coefficient that defines how to change the moving amount of the playback position in correspondence with the press time tp of the return key 106 or send key 107, and for example, a moving coefficient defining that the playback position should be moved by an amount corresponding to 10 times the press time tp (in which case, when the press time tp is 2 sec, the moving amount corresponds to 20 sec) can be set from the setting window of the operation panel 52. The function of the return key and send key can be finely set in accordance with user's will.

Hence, according to the fourth embodiment, the playback position of a video image can be intuitively designated in proportion to the user's key press time, though this operation is unavailable by conventional video image send or return processing to each chapter with a scan key.

### <Fifth Embodiment>

In the fifth embodiment, especially the operations described in the first and second embodiments are performed not only for a return key 106 but also for a send key 107.

More specifically, the address of a change point in main-picture image or sub-picture image in the first embodiment or the address of a singular point in audio information in the second embodiment is always monitored as the video image is played back. When the address is updated and recorded, instantaneous movement is possible. However, when a method of detecting a change point after the return key 106 or send key 107 is pressed is employed, a portion to which the playback position is to be moved can be detected even for video information or audio information that is not played back yet. Hence, the send key 107 can be operated in the same say as in the return key 106.

With this method, for, e.g., subtitle information shown in FIG. 5, the playback position can freely be moved to the start position of each subtitle in accordance with the number of times of pressing the return key 106 or send key 107. More specifically, when the return key 106 is pressed once, the playback position can be moved to a subtitle JR1 (S41). When the return key 106 is pressed twice, the playback position can be moved to a subtitle JR2 (S42). When the return key 106 is pressed three times, the playback position can be moved to a subtitle JR3 (S43). Similarly, when the send key 107 is pressed once, the playback position can be moved to a subtitle JF1 (S44). When the send key 107 is pressed twice, the playback position can be moved to a subtitle JF2 (S45). When the send key 107 is pressed three times, the playback position can be moved to a subtitle JF3 (S46). When the send key 107 is pressed four times, the playback position can be moved to a subtitle JF4 (S47).

As described above, when the method of detecting the address at the moving destination is taken into consideration, the send key 107 having the same function as that of the return key 106 can be implemented. When the two keys are operated in combination, intuitive and fine movement to the playback position, which is unavailable by a conventional fast forward key, fast rewind key, or scan key, can be performed. Accordingly, the video image can be instantaneously moved to a playback position corresponding to the contents video information to be seen. The user can play back a desired portion by intuitive key operation. Hence, a video playback apparatus which allows the user to understand the video contents well in a short time can be provided.

Those skilled in the art can implement the present invention by the above-described embodiments. Those skilled in the art can easily make various changes and modifications of these embodiments and can apply them to various embodiments without any inventive capability. The invention is therefore not limited to the above-described embodiments and incorporates a broader aspect without inconsistency to the disclosed principle and novel features.

For example, in the above-described embodiments, a video recording/playback apparatus incorporating a hard disk or tuner has been exemplified. However, the present invention can be applied to a standalone optical disk playback apparatus within the spirit and scope of the invention.

As has been described above in detail, according to the present invention, a desired portion can be instantaneously played back by intuitive key operation in accordance with a change in video information or audio information. Hence, a video playback apparatus which allows a user to understand video contents well in a short time can be provided.

## Claims

1. A video playback apparatus adapted for playing back video and audio information from a designated playback position comprising:
a buffer section (63, 64) adapted to store digital video information, the digital video information containing at least main-picture information, sub-picture information and audio information;
a playback section (16, 31, 33, 34, 60) adapted to read out and play back the main-picture information, the sub-picture information and the audio information from the buffer section (63, 64), and to play back the main-picture information, the sub-picture information and the audio information in accordance with a playback instruction; and
a control section (16, 31, 33, 34, 60) adapted to determine, upon receiving a return instruction of the playback position, the playback position of the playback section (16, 31, 33, 34, 60)
**characterized in that**
said control section (16, 31, 33, 34, 60) is adapted to perform the control of the playback position in accordance with a change in the sub-picture information of the digital video information to return to the playback position and to start playback from the playback position.

2. An apparatus according to claim 1, **characterized in that** the control section (16, 31, 33, 34, 60) is adapted to store an address of the digital video information as a moving destination on the basis of a change in sub-picture information of the digital video information before receiving the return instruction of the playback position, and upon receiving the return instruction of the playback position, to return the playback position of the playback section (16, 31, 33, 34, 60) in accordance with the address, and to start playback by the playback section (16, 31, 33, 34, 60).

3. An apparatus according to claim 1, **characterized in that** the control section (16, 31, 33, 34, 60) is adapted to determine the playback position on the basis of a change in subtitle information of sub-picture information of the digital video information, upon receiving the return instruction of the playback position, to return the playback position of the playback section (16, 31, 33, 34, 60) on the basis of the return instruction, and to start playback by the playback section (16, 31, 33, 34, 60).

4. An apparatus according to claim 1, **characterized in that** the control section (16, 31, 33, 34, 60) is adapted to determine the playback position on the basis of a change in main-picture information of the digital video information, upon receiving the return instruction of the playback position, to return the playback position of the playback section (16, 31, 33, 34, 60) on the basis of the return instruction, and to start playback by the playback section (16, 31, 33, 34, 60).

5. An apparatus according to claim 1, **characterized in that** the control section (16, 31, 33, 34, 60) is adapted to store an address of the digital video information as a moving destination on the basis of a change in main-picture information of the digital video information before receiving the return instruction of the playback position, and upon receiving the return instruction of the playback position, to return the playback position of the playback section (16, 31, 33, 34, 60) in accordance with the address, and to start playback by the playback section (16, 31, 33, 34, 60).

6. An apparatus according to claim 1, **characterized by** further comprising:
a setting section (16, 31, 33, 34, 60) adapted to set a moving amount in advance, and upon receiving a return instruction of the playback position, to control to return the playback position of the playback section (16, 31, 33, 34, 60) in accordance with the set moving amount and to start playback by the playback section (16, 31, 33, 34, 60).

7. An apparatus according to claim 1, **characterized by** further comprising:
a measuring section (16, 31, 33, 34, 60) adapted to measure a press time of a key for a return instruction, and to determine a moving amount in accordance with the measured press time, to return a playback position of the playback section (16, 31, 33, 34, 60) on the basis of the moving amount, and to start playback by the playback section (16, 31, 33, 34, 60).

8. A video playback method which plays back video and audio information from a designated playback position comprising:
reading out and playing back digital video information from a buffer section (63, 64) which stores the digital video information in accordance with a playback instruction, the digital video information containing at least main-picture information, sub-picture information and audio information; and
upon receiving a return instruction of the playback position:
controlling to determine the playback position in accordance with a change in the sub-picture information of the digital video information,
returning to the playback position and
starting playback from the playback position.

9. A method according to claim 8, **characterized by** further comprising: controlling to determine the playback position on the basis of a change in sub-title information of the sub-picture information of the digital video information, upon receiving the return instruction of the playback position, to return the playback position on the basis of the return instruction, and to start playback.

10. A method according to claim 8, **characterized by** further comprising: controlling to advance the playback position in accordance with a change in one of a sub-picture information of the digital video information or a digital audio information and to start playback from the playback position.

## Patentansprüche

1. Video-Wiedergabevorrichtung, die für die Wiedergabe von Video- und Audioinformation von einer gekennzeichneten Wiedergabeposition angepasst ist, mit:
einem Pufferabschnitt (63, 64), der angepasst ist, um digitale Videoinformation zu speichern, wobei die digitale Videoinformation mindestens Haupt-Bildinformation, Neben-Bildinformation und Audioinformation enthält;
einem Wiedergabeabschnitt (16, 31, 33, 34, 60), der angepasst ist, um die Haupt-Bildinformation, die Neben-Bildinformation und die Audioinformation von dem Pufferabschnitt (63, 64) auszulesen und wiederzugeben, und die Haupt-Bildinformation, die Neben-Bildinformation und die Audioinformation in Übereinstimmung mit einer Wiedergabeanweisung wiederzugeben; und
einem Steuerabschnitt (16, 31, 33, 34, 60), der angepasst ist, um nach Empfangen einer Rückkehranweisung der Wiedergabeposition die Wiedergabeposition des Wiedergabeabschnitts (16, 31, 33, 34, 60) zu bestimmen,
**dadurch gekennzeichnet, dass**
der Steuerabschnitt (16, 31, 33, 34, 60) angepasst ist, um die Steuerung der Wiedergabeposition in Übereinstimmung mit einer Änderung in der Neben-Bildinformation der digitalen Videoinformation durchzuführen, um zu der Wiedergabeposition zurückzukehren und die Wiedergabe von der Wiedergabeposition zu starten.

2. Vorrichtung gemäß Anspruch 1, **dadurch gekennzeichnet, dass** der Steuerabschnitt (16, 31, 33, 34, 60) angepasst ist, um eine Adresse der digitalen Videoinformation als ein Bewegungsziel auf der Grundlage einer Änderung in der Neben-Bildinformation der digitalen Videoinformation vor Empfangen der Rückkehranweisung der Wiedergabeposition zu speichern und nach Empfangen der Rückkehranweisung der Wiedergabeposition die Wiedergabeposition des Wiedergabeabschnitts (16, 31, 33, 34, 60) in Übereinstimmung mit der Adresse zurückzuführen und die Wiedergabe durch den Wiedergabeabschnitt (16, 31, 33, 34, 60) zu starten.

3. Vorrichtung gemäß Anspruch 1, **dadurch gekennzeichnet, dass** der Steuerabschnitt (16, 31, 33, 34, 60) angepasst ist, um die Wiedergabeposition auf der Grundlage einer Änderung in der Unter-Titelinformation der Neben-Bildinformation der digitalen Videoinformation zu bestimmen, nach Empfangen der Rückkehranweisung der Wiedergabeposition die Wiedergabeposition des Wiedergabeabschnitts (16, 31, 33, 34, 60) auf der Grundlage der Rückkehranweisung zurückzuführen und die Wiedergabe durch den Wiedergabeabschnitt (16, 31, 33, 34, 60) zu starten.

4. Vorrichtung gemäß Anspruch 1, **dadurch gekennzeichnet, dass** der Steuerabschnitt (16, 31, 33, 34, 60) angepasst ist, um die Wiedergabeposition auf der Grundlage einer Änderung in der Haupt-Bildposition der digitalen Videoinformation zu bestimmen, nach Empfangen der Rückkehranweisung der Wiedergabeposition die Wiedergabeposition des Wiedergabeabschnitts (16, 31, 33, 34, 60) auf der Grundlage der Rückkehranweisung zurückzuführen und die Wiedergabe durch den Wiedergabeabschnitt (16, 31, 33, 34, 60) zu starten.

5. Vorrichtung gemäß Anspruch 1, **dadurch gekennzeichnet, dass** der Steuerabschnitt (16, 31, 33, 34, 60) angepasst ist, um eine Adresse der digitalen Videoinformation als ein Bewegungsziel auf der Grundlage einer Änderung in der Haupt-Bildinformation der digitalen Videoinformation vor Empfangen der Rückkehranweisung der Wiedergabeposition zu speichern, und nach Empfangen der Rückkehranweisung der Wiedergabeposition die Wiedergabeposition des Wiedergabeabschnitts (16, 31, 33, 34, 60) in Übereinstimmung mit der Adresse zurückzuführen und die Wiedergabe durch den Wiedergabeabschnitt (16, 31, 33, 34, 60) zu starten.

6. Vorrichtung gemäß Anspruch 1, ferner **gekennzeichnet durch**:
einen Einstellabschnitt (16, 31, 33, 34, 60), der angepasst ist, um einen Bewegungswert im Voraus einzustellen, und nach Empfangen einer Rückkehranweisung der Wiedergabeposition zu steuern, um die Wiedergabeposition des Wiedergabeabschnitts (16, 31, 33, 34, 60) in Übereinstimmung mit dem eingestellten Bewegungswert zurückzuführen und die Wiedergabe **durch** den Wiedergabeabschnitt (16, 31, 33, 34, 60) zu starten.

7. Vorrichtung gemäß Anspruch 1, ferner **gekennzeichnet durch**:
einen Messabschnitt (16, 31, 33, 34, 60), der angepasst ist, um eine Drückzeit einer Taste für eine Rückkehranweisung zu messen, und um einen Bewegungswert in Übereinstimmung mit der gemessenen Drückzeit zu bestimmen, um eine Wiedergabeposition des Wiedergabeabschnitts (16, 31, 33, 34, 60) auf der Grundlage des Bewegungswerts zurückzuführen und die Wiedergabe **durch** den Wiedergabeabschnitt (16, 31, 33, 34, 60) zu starten.

8. Video-Wiedergabeverfahren, das Video- und Audioinformation von einer gekennzeichneten Wiedergabeposition wiedergibt, mit:
Auslesen und Wiedergeben von digitaler Videoinformation von einem Pufferabschnitt (63, 64), der die digitale Videoinformation in Übereinstimmung mit einer Wiedergabeanweisung speichert, wobei die digitale Videoinformation mindestens Haupt-Bildinformation, Neben-Bildinformation und Audioinformation enthält; und
nach Empfangen einer Rückkehranweisung der Wiedergabeposition:
Steuern, um die Wiedergabeposition in Übereinstimmung mit einer Änderung in der Neben-Bildinformation der digitalen Videoinformation zu bestimmen,
Zurückkehren zu der Wiedergabeposition und
Starten der Wiedergabe von der Wiedergabeposition.

9. Verfahren gemäß Anspruch 8, ferner **gekennzeichnet durch**:
Steuern, um die Wiedergabeposition auf der Grundlage einer Änderung in der Unter-Titelinformation der Neben-Bildinformation der digitalen Videoinformation zu bestimmen, nach Empfangen der Rückkehranweisung der Wiedergabeposition die Wiedergabeposition auf der Grundlage der Rückkehranweisung zurückzuführen und die Wiedergabe zu starten.

10. Verfahren gemäß Anspruch 8, ferner **gekennzeichnet durch**:
Steuern, um die Wiedergabeposition in Übereinstimmung mit einer Änderung in einer Neben-Bildinformation der digitalen Videoinformation oder einer digitalen Audioinformation vorzurücken und die Wiedergabe von der Wiedergabeposition zu starten.

## Revendications

1. Appareil de lecture vidéo adapté pour lire des informations vidéo et audio à partir d'une position de lecture désignée comprenant :
une section de mémoire tampon (63, 64) adaptée pour stocker des informations vidéo numériques, les informations vidéo numériques contenant au moins des informations d'image principale, des informations de sous-image et des informations audio ;
une section de lecture (16, 31, 33, 34, 60) adaptée pour afficher et lire les informations d'image principale, les informations de sous-image et les informations audio à partir de la section de mémoire tampon (63, 64), et
pour lire les informations d'image principale, les informations de sous-image et les informations audio conformément à une instruction de lecture ; et
une section de commande (16, 31, 33, 34, 60) adaptée pour déterminer, à réception d'une instruction de retour de la position de lecture, la position de lecture de la section de lecture (16, 31, 33, 34, 60)
**caractérisé en ce que**
ladite section de commande (16, 31, 33, 34, 60) est adaptée pour procéder à la commande de la position de lecture conformément à un changement des informations de sous-image des informations vidéo numériques pour retourner à la position de lecture et pour commencer la lecture à partir de la position de lecture.

2. Appareil selon la revendication 1, **caractérisé en ce que** la section de commande (16, 31, 33, 34, 60) est adaptée pour stocker une adresse des informations vidéo numériques en tant que destination de déplacement sur la base d'un changement des informations de sous-image des informations vidéo numériques avant la réception de l'instruction de retour de la position de lecture, et à réception de l'instruction de retour de la position de lecture, pour retourner à la position de lecture de la section de lecture (16, 31, 33, 34, 60) conformément à l'adresse, et pour commencer la lecture grâce à la section de lecture (16, 31, 33, 34, 60).

3. Appareil selon la revendication 1, **caractérisé en ce que** la section de commande (16, 31, 33, 34, 60) est adaptée pour déterminer la position de lecture sur la base d'un changement des informations de sous-titre des informations de sous-image des informations vidéo numériques, à réception de l'instruction de retour de la position de lecture, pour retourner à la position de lecture de la section de lecture (16, 31, 33, 34, 60) sur la base de l'instruction de retour, et pour commencer la lecture grâce à la section de lecture (16, 31, 33, 34, 60).

4. Appareil selon la revendication 1, **caractérisé en ce que** la section de commande (16, 31, 33, 34, 60) est adaptée pour déterminer la position de lecture sur la base d'un changement des informations d'image principale des informations vidéo numériques, à réception de l'instruction de retour de la position de lecture, pour retourner à la position de lecture de la section de lecture (16, 31, 33, 34, 60) sur la base de l'instruction de retour, et pour commencer la lecture grâce à la section de lecture (16, 31, 33, 34, 60).

5. Appareil selon la revendication 1, **caractérisé en ce que** la section de commande (16, 31, 33, 34, 60) est adaptée pour stocker une adresse des informations vidéo numériques en tant que destination de déplacement sur la base d'un changement des informations d'image principale des informations vidéo numériques avant la réception de l'instruction de retour de la position de lecture, et à réception de l'instruction de retour de la position de lecture, pour retourner à la position de lecture de la section de lecture (16, 31, 33, 34, 60) conformément à l'adresse, et pour commencer la lecture grâce à la section de lecture (16, 31, 33, 34, 60).

6. Appareil selon la revendication 1, **caractérisé en ce qu'**il comprend en outre :
une section de réglage (16, 31, 33, 34, 60) adaptée pour fixer une quantité de déplacement à l'avance, et à réception d'une instruction de retour de la position de lecture, pour commander afin de retourner à la position de lecture de la section de lecture (16, 31, 33, 34, 60) conformément à la quantité de déplacement fixée et pour commencer la lecture grâce à la section de lecture (16, 31, 33, 34, 60).

7. Appareil selon la revendication 1, **caractérisé en ce qu'**il comprend en outre :
une section de mesure (16, 31, 33, 34, 60) adaptée pour mesurer un temps d'appui sur une touche pour une instruction de retour, et pour déterminer une quantité de déplacement en fonction du temps d'appui mesuré, pour retourner à une position de lecture de la section de lecture (16, 31, 33, 34, 60) sur la base de la quantité de déplacement, et pour commencer la lecture grâce à la section de lecture (16, 31, 33, 34, 60).

8. Procédé de lecture vidéo qui lit des informations vidéo et audio à partir d'une position de lecture désignée comprenant :
l'affichage et la lecture d'informations vidéo numériques à partir d'une section de mémoire tampon (63, 64) qui stocke les informations vidéo numériques conformément à une instruction de lecture, les informations vidéo numériques contenant au moins des informations d'image principale, des informations de sous-image et des informations audio ; et
à réception d'une instruction de retour de la position de lecture :
la commande pour déterminer la position de lecture conformément à un changement des informations de sous-image des informations vidéo numériques,
le retour à la position de lecture et
le commencement de la lecture à partir de la position de lecture.

9. Procédé selon la revendication 8, **caractérisé en ce qu'**il comprend en outre : la commande pour déterminer la position de lecture sur la base d'un changement des informations de sous-titre des informations de sous-image des informations vidéo numériques, à réception de l'instruction de retour de la position de lecture, pour retourner à la position de lecture sur la base de l'instruction de retour, et pour commencer la lecture.

10. Procédé selon la revendication 8, **caractérisé en ce qu'**il comprend en outre : la commande pour avancer à la position de lecture conformément à un changement de l'une des informations de sous-image des informations vidéo numériques ou des informations audionumériques et pour commencer la lecture à partir de la position de lecture.
